# EUROPÄISCHE PATENTSCHRIFT

(11) **EP 0 958 973 B1**
(45) Veröffentlichungstag und Bekanntmachung des Hinweises auf die Patenterteilung: **07.07.2004**
(21) Anmeldenummer: 99108651.3
(22) Anmeldetag: 14.05.1999
(51) Int. Cl.: B60R 21/26

(54) **Mehrstufengasgenerator mit thermischer Entkoppelung der Treibsätze**
Multi-stage gas generator with thermal decoupling of the propulsive charges.
Générateur de gaz à plusieurs niveaux comportant un découplage thermique des charges combustibles

(30) Priorität: 19.05.1998 DE 29809062 U
(43) Veröffentlichungstag der Anmeldung: 24.11.1999
(73) Patentinhaber: TRW Airbag Systems GmbH, 84544 Aschau am Inn (DE)
(72) Erfinder: Müller, Werner, 84453 Mühldorf/Inn (DE); Schropp, Roland, 93105 Tegernheim (DE)
(74) Vertreter: Kitzhofer, Thomas, Dipl.-Ing.

(56) Entgegenhaltungen:
- EP-A- 0 792 776
- EP-A- 0 844 147
- WO-A-98/39183
- US-A- 5 219 178
- US-A- 5 697 639

## Beschreibung

Die Erfindung betrifft einen Mehrstufengasgenerator.

Mehrstufengasgeneratoren mit unabhängig voneinander zündbaren Treibsätzen können unterschiedliche Gasmengen, abgestimmt auf Fahrzeuginsassen oder unfallspezifische Parameter, erzeugen. Wird nur ein Treibsatz gezündet, erwärmt das ausströmende heiße Gas aber zwangsläufig die Außen- und Innenwandungen, so daß Wärme zum nicht gezündeten Treibsatz weitergeleitet wird. Dies kann theoretisch dazu führen, daß sich aufgrund des relativ langsamen Wärmetransports der nicht gezündete Treibsatz nach einigen Minuten selbst entzündet. Dies birgt Gefahren sowohl für den sich noch im Fahrzeug befindlichen Insassen, als auch für Rettungskräfte.

Die für die unabhängigen Ansprüche 1,4 und 9 gattungsbildende EP-A-0 792 776 zeigt einen Zwei-Stufen-Hybrid-Gasgenerator, bei dem eine erste Stufe eine mit Gas gefüllte Kammer besitzt, in deren Innerem wiederum eine mit Brennstoff gefüllte Brennkammer angeordnet ist. Eine zweite Stufe umfaßt ebenfalls eine mit Druckgas gefüllte Kammer, die mittels eines Zünders geöffnet werden kann. Die mit Druckgas gefüllten Behälter sind über einen Diffusor mechanisch miteinander verbunden, wobei der Diffusor durch eine Trennwand in zwei Kammern unterteilt ist.

Die US-A-5 219 178 beschreibt einen Zwei-Stufen-Rohrgasgenerator, bei dem eine Brennkammer an jedem axialen Ende angeordnet ist. Zwischen den Brennkammern ist eine gemeinsame Filterkammer vorgesehen. Stromabwärts und nahe der Ausströmöffnungen jeder Brennkammerwand ist ein sogenanntes Zwischenfilter vorgesehen, das der Gasumlenkung und der Vorkühlung dient. Nach dem Aktivieren einer Stufe wird zeitlich in einem festen Abstand von 10 - 20 ms stets die zweite Stufe gezündet.

Aufgabe der Erfindung ist es, einen Mehrstufengasgenerator zu schaffen, bei dem die Gefahr der Selbstentzündung des nicht gezündeten Treibsatzes nach einigen Minuten durch Erhitzung des Gasgenerators weitgehend ausgeschlossen werden kann, selbst bei hohen Außentemperaturen.

Diese Aufgabe wird durch die Merkmale der Ansprüche 1, 4 oder 9 gelöst.

Die Lösung sieht vor, daß wenigstens eine Wärmedämmeinrichtung zwischen den Teibsätzen vorgesehen ist. Diese Wärmedämmeinrichtung reduziert den Transport von bei der Zündung eines Treibsatzes erzeugten Wärmeenergie zu einem anderen, nicht gezündeten Treibsatz so stark, daß der nicht gezündete Treibsatz unter seiner Selbstentzündungstemperatur bleibt. Gemäß der Erfindung ist die Brennkammer durch eine Brennkammerwand begrenzt. Die Wärmedämmeinrichtung besteht aus einer Isolierwand, die innenseitig zumindest Abschnitte oder auch die gesamte Brennkammerwand abdeckt oder auskleidet.

Gemäß einer weiteren Ausführungsform hat jede Brennkammer eine eigene Filterkammer, wobei die Filterkammern zwischen den Brennkammern angeordnet sind. Zwischen den Filterkammern wiederum ist die Wärmedämmeinrichtung vorgesehen, durch die die Filterkammern voneinander beabstandet sind. In einem Zwischenraum zwischen den Filterkammern kann Isoliermaterial oder Gas, wie z. B. Luft, für eine weitgehende thermische Entkoppelung der Filterkammern und damit der beiden Gasgeneratorhälften sorgen. Darüber hinaus kann auch ein zwischen den Filterkammern vorgesehenes Vakuum für eine solche thermische Entkoppelung sorgen.

Eine dritte erfindungsgemäße Lösung sieht wenigstens eine Kühleinrichtung im Bereich wenigstens eines Treibsatzes vor. Die Kühleinrichtung entkoppelt damit den Wärmefluß von einem gezündeten Treibsatz zu einem anderen.

Die Isolierwand ist aus Isoliermaterial, vorzugsweise Kunststoff, wie das eine geringe Wärmeleitfähigkeit aufweisende Polyamid oder Polyvinylchlorid. Darüber hinaus kann als Isoliermaterial auch Keramik eingesetzt werden.

Vorzugsweise ist der Gasgenerator ein Rohrgasgenerator mit zwei an entgegengesetzten Enden des Rohres angeordneten Brennkammern und wenigstens einer zwischen den Brennkammern angeordneten Filterkammer.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Längsschnittansicht durch einen Rohrgasgenerator nach der Erfindung gemäß einer ersten Ausführungsform, mit zwei separaten
Filterkammern, Fig. 2 eine Längsschnittansicht durch einen Rohrgasgenerator gemäß einer zweiten Ausführungsform, mit einer gemeinsamen Filterkammer und einer Kühleinrichtung, und
Fig. 3 eine Längsschnittansicht durch die linke Hälfte eines Rohrgasgenerators gemäß einer dritten Ausführungsform.

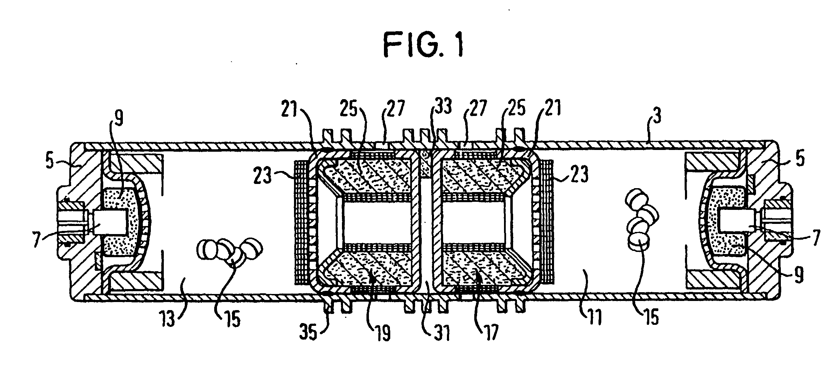

In Fig. 1 ist ein Rohrgasgenerator mit einer rohrförmigen Außenwand, nachfolgend Rohr 3 genannt, gezeigt. An den axialen Enden sind in den Abschlußdeckeln 5 integrierte Zünder 7 vorgesehen, die von einer Verstärkerladung 9 umgeben sind. Der Gasgenerator weist zwei Brennkammern 11 und 13 auf, die mit Treibsätzen 15 gefüllt sind, wobei die Brennkammern 11, 13 ein unterschiedliches Volumen aufweisen. Jede Brennkammer 11, 13 hat eine eigene, innenliegende Filterkammer 17 bzw. 19, die durch eine eigene, mehrteilige Wandung 21 definiert ist. Die Wandung 21 bildet in dem Abschnitt zur Brennkammer gleichzeitig die Brennkammerwandung. Vor den Eintrittsöffnungen zu jeder Filterkammer liegt in jeder Brennkammer 11, 13 ein Filter 23. In jeder Filterkammer 17, 19 ist ebenfalls ein Filterpaket 25 vorgesehen. Die Gehäuse 21 weisen radiale Austrittsöffnungen auf, die in Austrittsöffnungen 27 im Rohr 3 münden.

Die beiden Filterkammern 17, 19 sind voneinander durch einen Zwischenraum 31 getrennt, der eine Wärmedämmeinrichtung bildet oder aufnimmt. Diese Wärmedämmeinrichtung ist in dem gezeigten Fall der Zwischenraum 31 samt der in ihm enthaltenen Luft, die eine Wärmeübertragung von einer Filterkammer zur benachbarten Filterkammer erschwert. Darüber hinaus kann im Zwischenraum 31 aber auch ein Vakuum vorgesehen sein und so der Wärmetransport nochmals erschwert werden. Eine andere Möglichkeit besteht darin, wie im oberen Teil des Zwischenraums 31 bereits angedeutet, den Zwischenraum 31 in Fig. 1 zumindest teilweise mit Isoliermaterial 33 auszufüllen. Als Isoliermaterial bietet sich Keramik oder Kunststoff wie PA oder PVC an, die dann auch eine Isolierwand bilden.

Im Bereich der Filterkammern hat das Rohr 3 außenseitig radial abstehende Rippen 35, die eine Kühleinrichtung bilden.

Die Funktionsweise des gezeigten Mehrstufengenerators wird im Folgenden erläutert. Wenn ein leichter Unfall stattfindet, wird nur der linke Treibsatz 15, der ein geringeres Volumen als der rechte Treibsatz aufweist, gezündet. Das Gas strömt durch das Filter 23 in das Innere der Filterkammer 19 und dort durch das Filterpaket 25 über die Ausströmöffnungen 27 in ein Fahrzeuginsassen-Rückhaltesystem, wie z. B. einen Gassack oder einen Gurtstraffer. Da der gezeigte Rohrgasgenerator kein Hybrid- sondern ein rein pyrotechnischer Gasgenerator ist, sind die entweichenden Gase sehr heiß. Die Wandung 21 wird deshalb ebenso wie das Rohr 3 erwärmt. Über die Rippen 33 erfolgt jedoch bereits eine Wärmeabgabe an die Umgebung, so daß über das Rohr relativ wenig Wärme bis zum rechten Treibsatz 15 gelangt. Trotz der sehr großen sich gegenüberliegenden Abschnitte der Wandungen 21 der Filterkammern 17, 19 erfolgt nur relativ wenig Wärmetransport zur rechten Filterkammer 17 aufgrund der vorgesehenen Wärmedämmeinrichtung, so daß eine Selbstzündung des in der Brennkammer 11 befindlichen Treibsatzes 15 bei üblichen Außentemperaturen zwischen -40 und +100 ° C nicht erfolgen kann.

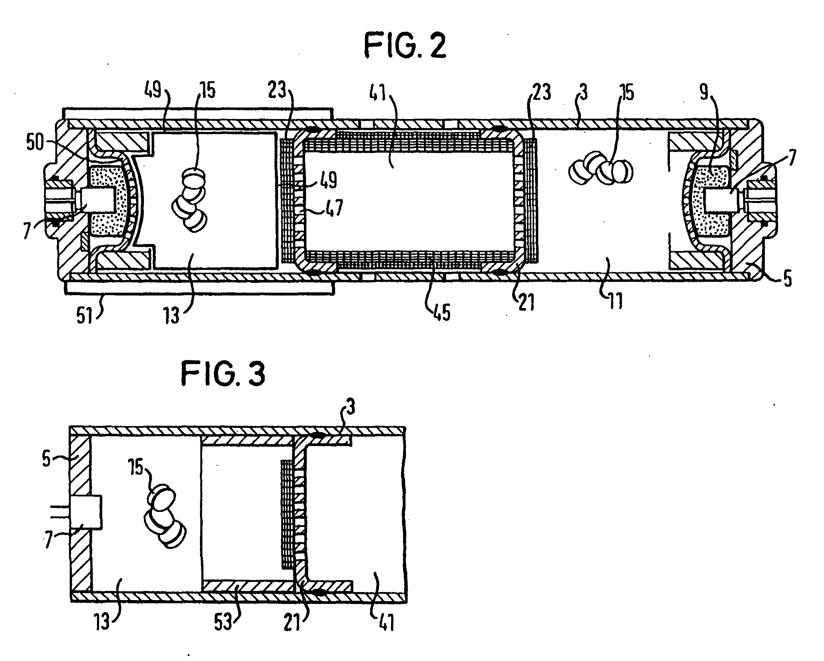

Bei der in Figur 2 gezeigten Ausführungsform ist anstatt der beiden Filterkammern 17, 19 eine gemeinsame Filterkammer 41 vorgesehen, in die Gas von beiden Brennkammern 11, 13 aus einströmen kann. Im Vergleich zu den Filterkammern 17, 19 hat die Filterkammer 41 nur ein Filter 45 von relativ geringer Masse, damit in diesem, beide Brennkammern verbindenden Teil nicht zu viel Wärmeenergie aufgenommen wird, die dann zu dem nicht gezündeten Treibsatz geleitet werden könnte. Auf der Innenseite der Wandungen 21 ist im Bereich der Durchströmöffnungen 47 eine Metallfolie, Keramikpapier oder ein Vlies 49 vorgesehen, das die Durchströmöffnungen 47 abdeckt und nur von innen, das heißt von der zugeordneten Brennkammer 11 oder 13 aus zerstört werden kann, nicht jedoch über die Filterkammer 41. Damit wird ein Überströmen von heißem Gas in die nicht gezündete Brennkammer verhindert. Bei dieser Ausführungsform ist der linke Treibsatz 15 vom rechten Treibsatz 15 sowohl durch eine Wärmedämmeinrichtung, als auch durch eine Kühleinrichtung thermisch weitgehend entkoppelt. Die Wärmedämmeinrichtung wird durch das Keramikpapier 49 gebildet, das eine Isolierwand aus Isoliermaterial darstellt und in das der linke Treibsatz 15 eingepackt ist. Das Keramikpapier 49 grenzt an die Brennkammerwandung, die zum Teil durch das Rohr 3, zum Teil durch das Filter 23 und zum Teil durch eine Wandung 50 zum Zünder 7 hin gebildet ist. Die Kühleinrichtung 51 umfaßt einen das Rohr 3 im Bereich des linken Treibsatzes 15 umgebenden, Kühlflüssigkeit enthaltenden, hohlen Körper.

Bei der in Fig. 3 dargestellten Ausführungsform ist als Wärmedämmeinrichtung ein Keramikrohrstück in die Brennkammer 13 eingesetzt. Das Keramikrohrstück, welches mit 53 bezeichnet ist, liegt unmittelbar an der Innenseite des Rohres 3 an und grenzt darüber hinaus an die Wandung 21 zur Filterkammer 41 an. Das Rohrstück 53 bildet eine Isolierwand, die einen Wärmeübergang von der Brennkammer 13 bei Zündung ihres Treibsatzes 15 über das Rohr 3 zur Brennkammer 11 ebenso erschwert wie umgekehrt einen Wärmeübergang aufgrund der Zündung des rechten Treibsatzes 15 über das Rohr 3 zum linken Treibsatz 15. Je nach Länge des Rohres 3 und der Filterkammer 41 sowie der Kapazität der Treibsätze kann das Rohr 53 relativ kurz bauen oder sich sogar über die gesamte Länge der Brennkammer 13 erstrecken.

## Patentansprüche

1. Mehrstufengasgenerator,
mit einem Gehäuse mit einer Außenwandung sowie Innenwandungen, wenigstens zwei mit mindestens einem Treibsatz (15) gefüllten Brennkammern (11, 13),
jeweils einem, einem Treibsatz (15) zugeordneten Zünder (7) zur unabhängigen Auslösung jedes Treibsatzes (15),
wobei wenigstens eine Wärmedämmeinrichtung zwischen den Treibsätzen (15) vorgesehen ist, die einen Transport von, bei der Zündung eines Treibsatzes (15) erzeugten Wärmeenergie zu einem anderen, nicht gezündeten Treibsatz so stark reduziert, daß der nicht gezündete Treibsatz unter seiner Selbstentzündungstemperatur bleibt, und
wobei im Inneren der Brennkammer (11, 13) eine die Wärmedämmeinrichtung bildende Isolierwand aus Isoliermaterial vorgesehen ist, die einen Wärmeübergang auf die die Brennkammer (11, 13) umgebende Brennkammerwand erschwert.

2. Mehrstufengasgenerator nach Anspruch 1, **dadurch gekennzeichnet, daß** wenigstens eine Brennkammer (11, 13) innenseitig vollständig mit Isoliermaterial ausgekleidet ist und das Isoliermaterial die Isolierwand bildet.

3. Mehrstufengasgenerator nach einem der vorhergehenden Ansprüche, **dadurch gekennzeichnet, daß** die die Wärmedämmeinrichtung enthaltende Brennkammer (13) zylindrisch ist und die Wärmedämmeinrichtung ein aus Isoliermaterial bestehendes Rohr (53) ist, wobei sich das Rohr von dem, der Filterkammer (41) nahen Ende der Brennkammer (13) aus erstreckt.

4. Mehrstufengasgenerator, insbesondere nach einem der vorhergehenden Ansprüche,
mit einem Gehäuse mit einer Außenwandung sowie Innenwandungen,
wenigstens zwei mit mindestens einem Treibsatz (15) gefüllten Brennkammern (11, 13),
jeweils einem, einem Treibsatz (15) zugeordneten Zünder (7) zur unabhängigen Auslösung jedes Treibsatzes (15),
wobei wenigstens eine Wärmedämmeinrichtung zwischen den Treibsätzen (15) vorgesehen ist, die einen Transport von, bei der Zündung eines Treibsatzes (15) erzeugten Wärmeenergie zu einem anderen, nicht gezündeten Treibsatz so stark reduziert, daß der nicht gezündete Treibsatz unter seiner Selbstentzündungstemperatur bleibt, und
wobei jede Brennkammer (11, 13) eine eigene, mit einem Filter ausgestattete Filterkammer (17, 19) aufweist und die Filterkammern (17, 19) axial zwischen den Brennkammern (11, 13) angeordnet, strömungsmäßig voneinander getrennt und durch die Wärmedämmeinrichtung beabstandet sind.

5. Mehrstufengasgenerator nach Anspruch 4, **dadurch gekennzeichnet, daß** der Gasgenerator ein Rohrgasgenerator ist, mit zwei an den entgegengesetzten Enden des Rohres (3) angeordneten Brennkammern (11, 13) und den dazwischen angeordneten Filterkammern (17, 19).

6. Mehrstufengasgenerator nach einem der Ansprüche 1 bis 3, **dadurch gekennzeichnet, daß** der Gasgenerator ein Rohrgasgenerator ist, mit zwei an den entgegengesetzten Enden des Rohres (3) angeordneten Brennkammern (11, 13) und wenigstens einer zwischen den Brennkammern (11,13) angeordneten Filterkammer (17, 19; 41).

7. Mehrstufengasgenerator nach Anspruch 4 oder 5, **dadurch gekennzeichnet, daß** ein Zwischenraum zwischen den beiden Filterkammern (17, 19) ein Vakuum aufweist.

8. Mehrstufengasgenerator nach einem der vorstehenden Ansprüche, **dadurch gekennzeichnet, daß** die Wäzmedämmeinrichtung wenigstens eines der folgenden Mittel umfaßt:
Isoliermaterial, vorzugsweise aus Kunststoff oder Keramik,
Gas,
Vakuum.

9. Mehrstufengasgenerator, inbesondere nach einem der vorstehenden Ansprüche, mit einem Gehäuse mit Außen- sowie Innenwandungen, wenigstens zwei mit einem Treibsatz (15) gefüllten Brennkammern (11, 13),
jeweils einem, einem Treibsatz (15) zugeordneten Zünder (7) zur unabhängigen Auslösung jedes Treibsatzes (15), **gekennzeichnet durch** wenigstens eine Kühleinrichtung, die eine Brennkammer (13) wenigstens teilweise umgibt.

10. Mehrstufengasgenerator nach einem der vorstehenden Ansprüche, **dadurch gekennzeichnet, daß** das Außengehäuse abstehende Kühlrippen (35) aufweist.

## Claims

1. A multi-stage gas generator,
comprising a housing having an outer wall and inner walls,
at least two combustion chambers (11, 13) filled with at least one propellant charge (15),
a respective igniter (7) associated with each propellant charge (15) for the independent activation of each propellant charge (15),
at least one thermal insulation means being provided between the propellant charges (15), which reduces a transport of thermal energy generated on ignition of one propellant charge (15) to another, non-ignited propellant charge so greatly that the non-ignited propellant charge remains below its autogenous ignition temperature, and
an insulating wall made of insulating material and forming the thermal insulation means being provided inside the combustion chamber (11, 13), the insulating wall impeding a heat transition to the combustion chamber wall surrounding the combustion chamber (11, 13).

2. The multi-stage gas generator according to Claim 1, **characterized in that** at least one combustion chamber (11, 13) is lined on the inner side completely with insulating material and the insulating material forms the insulating wall.

3. The multi-stage gas generator according to either of the preceding claims, **characterized in that** the combustion chamber (13) containing the thermal insulation means is cylindrical and the thermal insulation means is a tube (53) consisting of insulating material, the tube extending from the end of the combustion chamber (13) close to the filter chamber (41).

4. The multi-stage gas generator, in particular according to any of the preceding claims,
comprising a housing having an outer wall and inner walls,
at least two combustion chambers (11, 13) filled with at least one propellant charge (15),
a respective igniter (7) associated with each propellant charge (15) for the independent activation of each propellant charge (15),
at least one thermal insulation means being provided between the propellant charges (15), which reduces a transport of thermal energy generated on ignition of one propellant charge (15) to another, non-ignited propellant charge so greatly that the non-ignited propellant charge remains below its autogenous ignition temperature, and
each combustion chamber (11, 13) having its own filter chamber (17, 19) provided with a filter, and the filter chambers (17, 19) being arranged axially between the combustion chambers (11, 13), separated from each other in terms of flow and spaced apart by the thermal insulation means.

5. The multi-stage gas generator according to Claim 4, **characterized in that** the gas generator is a tubular gas generator having two combustion chambers (11, 13) arranged at the opposite ends of the tube (3) and the filter chambers (17, 19) arranged in between.

6. The multi-stage gas generator according to any of Claims 1 to 3, **characterized in that** the gas generator is a tubular gas generator having two combustion chambers (11, 13) arranged at the opposite ends of the tube (3) and at least one filter chamber (17, 19; 41) arranged between the combustion chambers (11, 13).

7. The multi-stage gas generator according to Claim 4 or 5, **characterized in that** an intermediate space between the two filter chambers (17, 19) has a vacuum.

8. The multi-stage gas generator according to any of the preceding claims, **characterized in that** the thermal insulation means comprises at least one of the following means:
insulating material, preferably made of plastic or ceramic,
gas,
vacuum.

9. The multi-stage gas generator, in particular according to any of the preceding claims, comprising a housing having outer and inner walls, at least two combustion chambers (11, 13) filled with a propellant charge (15),
a respective igniter (7) associated with each propellant charge (15) for the independent activation of each propellant charge (15), **characterized by** at least one cooling means which at least partially surrounds a combustion chamber (13).

10. The multi-stage gas generator according to any of the preceding claims, **characterized in that** the outer housing has protruding cooling ribs (35).

## Revendications

1. Générateur de gaz à plusieurs niveaux
comportant un boîtier avec une paroi extérieure ainsi que des parois intérieures,
au moins deux chambres de combustion (11, 13) remplies par au moins un combustible (15),
un allumeur (7) respectif associé à chaque combustible (15) pour déclencher chaque combustible (15) de manière indépendante,
entre les combustibles (15) étant prévu au moins un moyen calorifuge qui réduit un transport d'énergie calorifique, engendrée à l'allumage d'un combustible, (15) vers un autre combustible non allumé, si fortement que le combustible non allumé reste en dessous de sa température d'autoallumage, et
à l'intérieur de la chambre de combustion (11, 13) étant prévue une paroi isolante en matériau isolant formant le moyen calorifuge, qui rend difficile un transfert de chaleur sur la paroi de chambre de combustion entourant la chambre de combustion (11, 13).

2. Générateur de gaz à plusieurs niveaux selon la revendication 1, **caractérisé en ce qu'**au moins une chambre de combustion (11, 13) est entièrement revêtue sur l'intérieur par un matériau isolant et **en ce que** le matériau isolant forme la paroi isolante.

3. Générateur de gaz à plusieurs niveaux selon l'une des revendications précédentes, **caractérisé en ce que** la chambre de combustion (13) contenant le moyen calorifuge est cylindrique, et **en ce que** le moyen calorifuge est un tube (53) constitué par un matériau isolant, le tube s'étendant depuis l'extrémité de la chambre de combustion (13), qui est proche de la chambre de filtration (41).

4. Générateur de gaz à plusieurs niveaux, en particulier selon l'une des revendications précédentes,
comportant un boîtier avec une paroi extérieure ainsi que des parois intérieures,
au moins deux chambres de combustion (11, 13) remplies par au moins un combustible (15),
un allumeur (7) respectif associé à chaque combustible (15) pour déclencher chaque combustible (15) de manière indépendante,
entre les combustibles (15) étant prévu au moins un moyen calorifuge qui réduit un transport d'énergie calorifique, engendrée à l'allumage d'un combustible (15), vers un autre combustible non allumé, si fortement que le combustible non allumé reste en dessous de sa température d'autoallumage, et
chaque chambre de combustion (11, 13) présentant une chambre de filtration (17, 19) propre équipée d'un filtre, et les chambres de filtration (17, 19) étant agencées entre les chambres de combustion (11, 13), séparées l'une de l'autre du point de vue écoulement et espacées par le moyen calorifuge.

5. Générateur de gaz à plusieurs niveaux selon la revendication 4, **caractérisé en ce que** le générateur de gaz est un générateur de gaz tubulaire avec deux chambres de combustion (11, 13) agencées aux extrémités opposées du tube (3) et avec les chambres de filtration (17, 19) agencées entre celles-ci.

6. Générateur de gaz à plusieurs niveaux selon l'une des revendications 1 à 3, **caractérisé en ce que** le générateur de gaz est un générateur de gaz tubulaire avec deux chambres de combustion (11, 13) agencées aux extrémités opposées du tube (3) et avec au moins une chambre de filtration (17, 19 ; 41) agencées entre les chambres de combustion (11, 13).

7. Générateur de gaz à plusieurs niveaux selon la revendication 4 ou 5, **caractérisé en ce qu'**un espace intermédiaire entre les deux chambres de filtration (17, 19) présente un vide.

8. Générateur de gaz à plusieurs niveaux selon l'une des revendications précédentes, **caractérisé en ce que** le moyen calorifuge comprend au moins un des éléments suivants :
un matériau isolant, de préférence en matière plastique ou en céramique,
du gaz,
du vide.

9. Générateur de gaz à plusieurs niveaux selon l'une des revendications précédentes, comportant un boîtier avec une paroi extérieure ainsi que des parois intérieures, au moins deux chambres de combustion (11, 13) remplies par un combustible (15),
un allumeur (7) respectif associé à chaque combustible (15) pour déclencher chaque combustible (15) de manière indépendante, **caractérisé par** au moins un dispositif de refroidissement qui entoure au moins partiellement une chambre de combustion (13).

10. Générateur de gaz à plusieurs niveaux selon l'une des revendications précédentes, **caractérisé en ce que** le boîtier extérieur présente des nervures de refroidissement (35) en saillie.
